# FASCICULE DE BREVET EUROPEEN

(11) **EP 1 557 120 B1**
(45) Date de publication et mention de la délivrance du brevet: **15.11.2006**
(21) Numéro de dépôt: 05008859.0
(22) Date de dépôt: 18.09.2003
(51) Int. Cl.: A47J 37/06

(54) **Capot d'appareil électrique du type gaufrier**
Haube von einem elektronischen Waffeleisen
Hood of an electrical waffle cooker

(30) Priorité: 20.09.2002 FR 0211694
(43) Date de publication de la demande: 27.07.2005
(62) Demande divisionnaire de: 03292297.3
(73) Titulaire: SEB SA, 69130 Ecully (FR)
(72) Inventeur: Moine, Olivier, 73100 Aix-Les-Bains (FR)
(74) Mandataire: Lemoine, Jean-Sébastien

(56) Documents cités:
- EP-A- 0 657 132
- EP-A- 0 941 685
- DE-C- 4 031 218
- FR-A- 2 400 302
- FR-A- 2 671 473

## Description

La présente invention concerne un capot d'un appareil électrique du type gaufrier, c'est à dire, par exemple, un gaufrier, un cuiseur à madeleines, un gril a croque-monsieurs ou à sandwich (panini).

On connaît un tel appareil du type comprenant un sous-ensemble chauffant adapté à recevoir et à cuire un aliment, une coquille formant le corps du capot, servant de support au sous-ensemble chauffant et comportant des parois latérales dont l'extrémité supérieure délimite une ouverture dans laquelle le sous-ensemble chauffant est logé.

Dans les appareils de l'art antérieur dont la coquille est faite en une matière plastique ne supportant pas en continu une température supérieure à 115°C tel que le polypropylène, il est primordial d'éviter tout transfert de chaleur provenant du sous-ensemble chauffant vers la coquille.

Le problème posé est de réaliser un appareil électrique du type gaufrier dont le transfert de la chaleur provenant du sous-ensemble chauffant vers la coquille est limité.

Selon l'invention, les charactéristiques téchniques de la revendication 1 permettent de limiter le transfert de chaleur par convection.

D'autres particularités et avantages de la présente invention apparaîtront dans la description qui va suivre.

Aux figures données à titre d'exemple non limitatif :

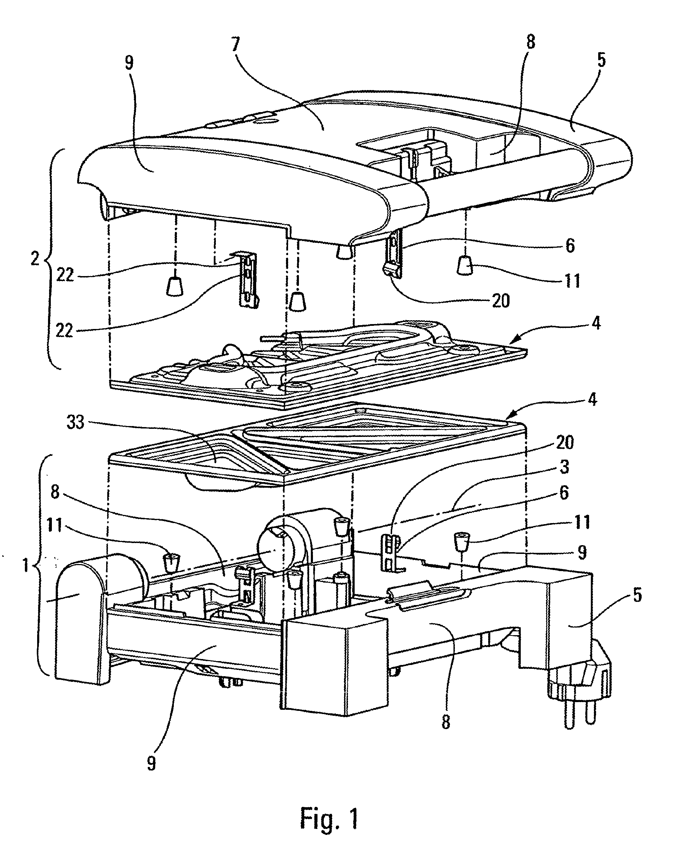

la figure 1 représente une vue en perspective éclatée d'un appareil électrique du type gaufrier muni de capots conforme à la présente invention ;

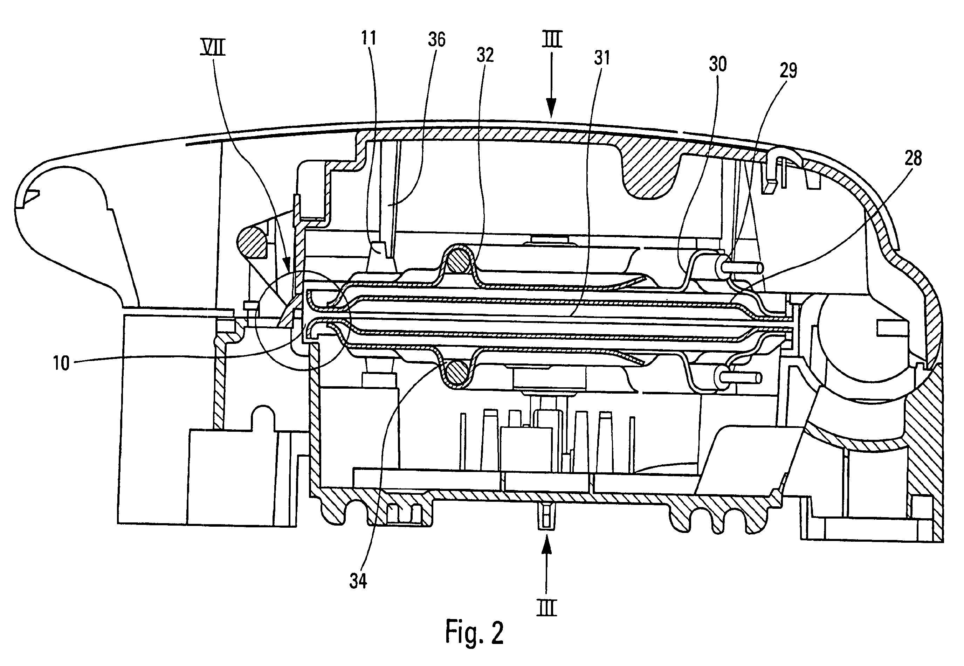

la figure 2 est une vue en coupe verticale du gaufrier en position fermée selon un plan normal à l'axe d'articulation des deux capots ;
la figure 3 est une vue en coupe du gaufrier selon la droite III-III de la figure 2 ;
la figure 4 est une vue agrandie de la zone IV de la figure 3 ;
La figure 5 est une vue agrandie de la zone V de la figure 3 ;
la figure 6 est une vue agrandie de la zone VI de la figure 3 ; et
la figure 7 est une vue agrandie de la zone VII de la figure 2.

Un appareil électrique du type gaufrier comprend de façon connue un capot inférieur 1 adapté à être posé sur un support, par exemple une table, et un capot supérieur 2. Les deux capots 1,2 sont mobiles entre eux autour d'un axe d'articulation 3, entre une position ouverte et une position fermée.

Chaque capot 1,2 comprend un sous-ensemble chauffant 4 qui est adapté à recevoir et à cuire (ou à griller) un aliment, une coquille 5 qui forme le corps du capot 1,2 et qui est adapté à servir de support au sous-ensemble chauffant 4, et des moyens de fixation 6 qui sont adaptés à fixer le sous-ensemble chauffant 4 à la coquille correspondante 5.

Chaque coquille 5 comprend une paroi de fond 7 qui s'étend selon un plan de base, et des parois latérales 8,9 qui s'étendent, perpendiculairement au plan de base, de la paroi de fond 7 jusqu'à une extrémité supérieure située sensiblement au niveau du sous-ensemble chauffant 4. Les parois latérales 8,9 comprennent deux parois latérales axiales 8 qui sont orientées de façon sensiblement parallèle à l'axe d'articulation 3 (l'une proche de la charnière et l'autre éloignée), et deux parois latérales transversales 9 qui sont orientées de façon sensiblement perpendiculaire à l'axe d'articulation 3.

L'extrémité supérieure des parois latérales 8,9 d'une coquille 5 définit une ouverture 10 qui est adaptée à recevoir le sous-ensemble chauffant 4.

Dans le présent mode de réalisation, chaque coquille 5 est faite en un matériau qui ne supporte pas en continu une température supérieure à 115°C, par exemple, en polypropylène.

De façon à protéger chaque coquille 5 de la chaleur provenant du sous-ensemble chauffant 4 correspondant, il n'y a pas de contact direct entre le sous-ensemble chauffant 4 et la coquille 5, ce qui limite la transmission de chaleur par conduction.

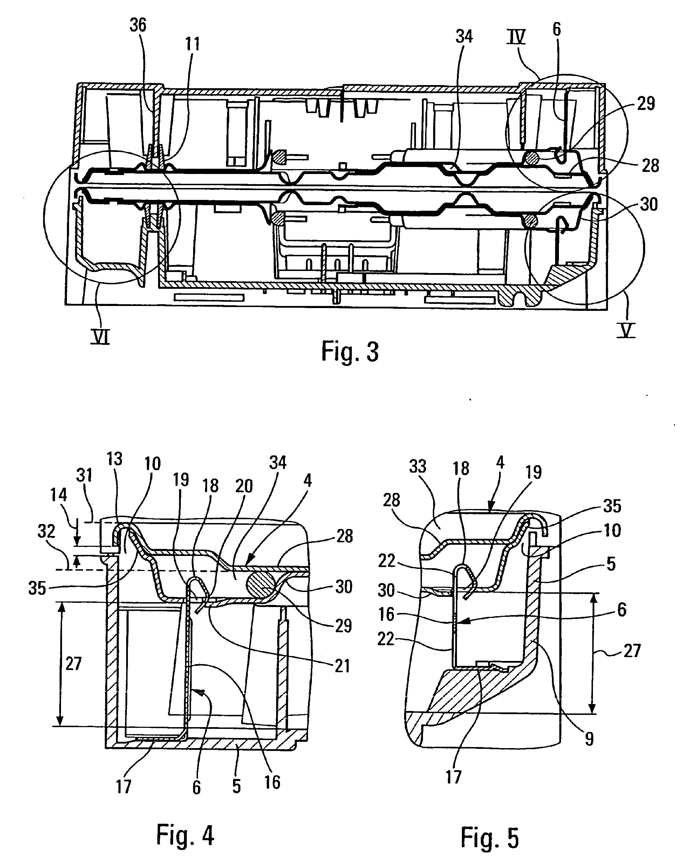

L'ouverture 10 n'est que partiellement obstruée par le sous-ensemble chauffant 4 : le sous-ensemble chauffant 4 n'est pas en contact avec les parois latérales 8,9 formant l'ouverture 10 dans laquelle il est logé, comme on peut le voir aux figures 4 à 7.

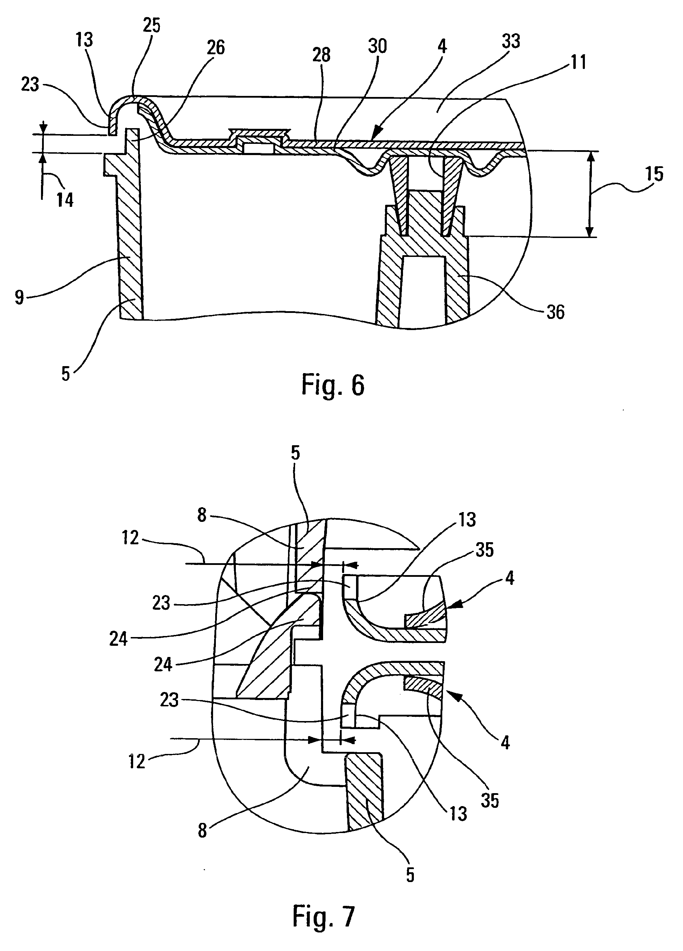

Dans le plan de l'ouverture 10, la distance horizontale minimale 12 entre les parois latérales 8,9 de la coquille 5 et le rebord périphérique 13 du sous-ensemble chauffant 4 est de 1 mm, et de préférence, au moins 1,5 mm (figure 7).

Perpendiculairement au plan de l'ouverture 10, la distance verticale minimale 14 entre les parois latérales 8,9 de la coquille 5 et le rebord périphérique 13 du sous-ensemble chauffant 4 est de 2 mm (figures 4 et 6).

En l'occurrence, les parois latérales 8,9 sont toujours situées à au moins 1 mm de distance de tout point du rebord périphérique 13 du sous-ensemble chauffant 4 correspondant, et de préférence à au moins 1,5 mm.

Ces distances permettent de protéger les parois latérales 8,9 de la chaleur transmise par conduction.

Par ailleurs, chaque coquille 5 est maintenue à une distance prédéterminée du sous-ensemble chauffant 4. par des moyens de liaison 11 qui sont réalisés en un matériau supportant en continu une température proche de 200°C, par exemple en matière plastique telle que la bakélite.

Les moyens de liaison 11 comprennent au moins une entretoise 11 qui est adaptée à empêcher tout contact direct entre le sous-ensemble chauffant 4 et la coquille 5 (figure 6).

La fonction de l'entretoise 11 est de limiter la transmission de la chaleur par conduction tout en permettant au sous-ensemble chauffant 4 d'être supporté par la coquille 5. L'entretoise 11 sert ainsi, en quelque sorte, d'isolateur thermique.

De préférence l'entretoise 11 est en contact avec la face inférieure du rebord périphérique 13 du sous-ensemble chauffant 4, de façon à être écartée de la résistance électrique 29 du sous-ensemble chauffant 4, dans les directions du plan contenant la résistance électrique 29. De ce fait et vue la très faible conduction thermique de la matière plastique utilisée, il est possible d'employer des entretoises 11 de faible longueur 15, de l'ordre de 10 mm (dans la direction normale à la paroi de fond 7 quand l'entretoise 11 est disposée dans le capot 1,2 correspondant). Ainsi, très peu de matière plastique supportant en continu de hautes températures est utilisé.

Dans l'exemple illustré, chaque capot 1,2 comprend quatre entretoises 11, chacune placée à un coin du sous-ensemble chauffant 4.

Par ailleurs, les moyens de fixation 6 sont aussi conformés de façon à transmettre le minimum de chaleur par conduction.

Les moyens de fixation 6 comprennent au moins un harpon 6 qui fixe le sous-ensemble chauffant 4 à la coquille 5 correspondante.

Comme on peut le voir aux figures 4 et 5, le harpon 6 comprend une languette 16 qui s'étend entre la paroi de fond 7 de la coquille 5 et le sous-ensemble chauffant 4 quand le harpon 6 est fixé au capot 1,2 correspondant.

De façon à fixer le sous-ensemble chauffant 4 à la coquille 5 correspondante, le harpon 6 est fixé, d'une part à la coquille 5, et, d'autre part, au sous-ensemble chauffant 4.

Afin d'être fixé à la coquille 5, le harpon 6 comprend, à une première extrémité de la languette 16, une base 17, perpendiculaire à la languette 16, et adaptée à être fixée à la paroi de fond 7 de la coquille 5, par exemple par surmoulage.

Afin d'être fixé au sous-ensemble chauffant 4, le harpon 6 comprend, à la deuxième extrémité de la languette 16, un crochet 18 qui est élastiquement déformable et qui est adapté à pénétrer dans un orifice 19 du sous-ensemble chauffant 4 correspondant. Le crochet 18 comprend au moins une ouverture 20 qui est adaptée à recevoir une patte 21 faisant saillie de la périphérie de l'orifice 19 du sous-ensemble chauffant 4. Le sous-ensemble chauffant 3 est ainsi fixé au crochet 18 par encliquetage.

Le harpon 6 est de préférence en un métal mauvais conducteur thermique, par exemple acier inoxydable, de façon à ne pas favoriser le transfert de chaleur par conduction thermique. Pour les mêmes raisons, le harpon 6 (plus particulièrement, la languette 16) est dimensionné, tant dans sa forme que dans sa longueur, de sorte que le chemin thermique entre la base 17 et le crochet 18 est suffisamment long pour éviter toute détérioration de la coquille 5, notamment au niveau de la partie de la coquille 5 en contact avec le harpon 6. De plus, la languette 16 du harpon 6 est de faible section et pour cela peut comprendre au moins une fente 22 : le harpon 6 muni de cette fente 22 ayant un coefficient de conduction thermique inférieur à un harpon 6 ayant les mêmes dimensions et fait dans la même matière.

Dans l'exemple illustré, chaque capot 1,2 comprend deux harpons 6.

De plus, la coquille 5 est conformée de façon à limiter la transmission de chaleur par convection.

Afin d'éviter une circulation de l'air situé dans le capot 1,2, entre la coquille 5 et le sous-ensemble chauffant 4, la paroi de fond 7 et les parois latérales 8,9 de chaque coquille 4 sont pleines. Il n'y a pas d'ouverture ni à la paroi de fond 14, ni aux parois latérales 8,9. L'air est ainsi quasiment statique.

Se plus, selon l'invention, l'agencement du sous-ensemble chauffant 4 dans l'ouverture 10 permet de gêner l'écoulement de l'air dans le capot 1,2 de façon à limiter le transfert de chaleur par convection.

Les distances horizontale 12 et verticale 14 séparant le sous-ensemble chauffant 4 de l'ouverture 10 de la coquille 5 sont limitées de façon à ne pas créer un passage suffisant permettant un phénomène de circulation de l'air dans le capot 1,2. Afin de limiter le phénomène de convection, les distances horizontale 12 et verticale 14 sont au maximum de 5 mm, et de préférence, au maximum de 3 mm.

Par ailleurs, toujours pour gêner l'écoulement de l'air, des chicanes sont réalisées dans la région de l'extrémité supérieure de parois latérales et du rebord périphérique 13 du sous-ensemble chauffant 4. Bien évidemment, plus la forme de la chicane est gênante pour l'écoulement de l'air, plus les distances horizontale 12 et verticale 14 peuvent être importantes.

Dans le présent exemple, l'extrémité supérieure 24 des parois latérales axiales 8 de la coquille 5 atteint un niveau supérieur à celui de l'extrémité extérieure 23 du rebord périphérique 13 du sous-ensemble chauffant 4 correspondant fixé à la coquille 5 (cf. figure 7). De ce fait, la chicane réalisée par la disposition de l'extrémité supérieure 24 des parois latérales axiales 8 par rapport à l'extrémité extérieure 23 du sous-ensemble chauffant 4 gêne la circulation de l'air.

De plus, dans le présent exemple, le rebord périphérique 13 du sous-ensemble chauffant 4 présente une bosse 25 dont le sommet fait saillie dans la direction opposée à la paroi de fond 7 de la coquille 5. L'extrémité supérieure 26 des parois latérales transversales 9 se trouve sous la bosse 25, mais atteint un niveau supérieur à celui de l'extrémité extérieur 23 du rebord périphérique 13 (cf. figure 6). De ce fait, la chicane réalisée par la disposition de l'extrémité supérieure 26 des parois latérales transversales 9 par rapport à l'extrémité extérieure 23 du sous-ensemble chauffant 4 gêne la circulation de l'air.

En outre, dans le présent exemple, le sous-ensemble chauffant 4 et la coquille 5 sont agencés de façon à limiter le transfert de chaleur par rayonnement.

La distance de séparation 27 minimale entre la paroi de fond 7 et le sous-ensemble chauffant 4 est de 26 mm. Cette distance minimale permet de protéger la paroi de fond 7 de la chaleur transmise par rayonnement.

La valeur de 26 mm de la distance de séparation 27 minimale fait que la longueur de la languette 16 du harpon 6 (qui est adaptée à une telle distance) est suffisante, d'une part, pour qu'il n'y ait pas de dégradation par conduction via le harpon 6 et, d'autre part, pour lui donner une bonne élasticité facilitant son accrochage au sous-ensemble chauffant 4.

De même, cette valeur minimale de la distance de séparation 27 fait que les entretoises 11 (dont la longueur 15 est de l'ordre de 10 mm) sont disposées sur des piedestals 36 qui dans cet exemple sont monoblocs avec la coquille 5.

Dans l'exemple illustré aux figures annexées, le sous-ensemble chauffant 4 comporte une plaque de cuisson 28, une résistance électrique 29 et une plaque additionnelle 30.

La plaque de cuisson 28 s'étend dans le plan de l'ouverture 10 jusqu'aux parois latérales, en respectant les distances minimales nécessaires pour éviter toute conduction (la coquille étant, dans le présent exemple, en polypropylène) et les distances maximales nécessaires pour éviter toute convection. La plaque de cuisson 28 s'étend transversalement au plan de l'ouverture 10 entre un plan supérieur 31 et un plan inférieur 32, tous deux parallèles au plan de l'ouverture 10. La plaque de cuisson 28 est munie d'au moins une cavité 33 adaptée à recevoir l'aliment à cuire et débouchant dans le plan supérieur 31.

La résistance électrique 29 est fixée extérieurement à la plaque de cuisson 28 au niveau du plan inférieur 32.

La plaque additionnelle 30 est en contact avec la plaque de cuisson 28 au niveau du plan inférieur 32 et comporte une empreinte 34 qui épouse la forme de la résistance 29 et qui épouse, sur une hauteur prédéterminée à partir du plan inférieur 32, au moins une partie de l'ensemble des cavités 33 de la plaque de cuisson 28, et y est en contact.

Afin de limiter la transmission de la chaleur vers la coquille 5, la plaque de cuisson 28 est en acier inoxydable (ou dans un autre métal peu conducteur de chaleur) et la plaque additionnelle 30 est en aluminium (ou dans un autre métal bon conducteur). La plaque additionnelle 30 en aluminium joue le rôle de diffuseur thermique en répartissant par conduction l'énergie thermique sur la partie de la plaque de cuisson 28 qui est en contact avec la plaque additionnelle 30.

Plus la surface de contact entre la plaque de cuisson 28 et la plaque additionnelle 30 est importante, plus l'énergie thermique est transmise à la plaque de cuisson 28, et moins elle est transmise en direction de la coquille 5 par rayonnement.

De plus, afin de limiter la chaleur transmise aux extrémités 24,16 des parois latérales 8,9 de la coquille 4 qui sont proches du rebord périphérique 13 de la plaque de cuisson 28, l'épaisseur de la plaque additionnelle 30 est, de préférence, comprise entre 0,8 et 1 mm. En effet, avec une telle épaisseur, l'effet de diffusion de la plaque additionnelle 30 dans le sens normal à son épaisseur est réduit. En conséquence, le rebord périphérique 35 de la plaque additionnelle 30 est moins chaud que les parties de la plaque additionnelle qui sont plus proches de la résistance électrique 29. De ce fait, le rebord périphérique 13 de la plaque de cuisson 28, adjacent au rebord périphérique 35 de la plaque additionnelle 30, reçoit moins d'énergie thermique et donc transmet moins de chaleur en direction des parois latérales 8,9.

Bien évidemment, cette épaisseur comprise entre 0,8 et 1 mm est suffisante pour diffuser de manière satisfaisante la chaleur vers les cavités 33 nécessaire à la cuisson de l'aliment. Cette épaisseur permet d'avoir en fait un écart de près de 50°C entre la résistance 29 et le rebord périphérique 35 de la plaque additionnelle 30.

Bien entendu, l'invention n'est pas limitée au mode de réalisation décrit en référence aux figures annexés, de nombreuses modifications peuvent y être apportées.

Il serait possible par exemple d'allonger les entretoises 11 de façon à ne pas utiliser de piedestal 36.

## Revendications

1. Capot (1,2) d'un appareil électrique du type gaufrier comprenant un sous-ensemble chauffant (4) adapté à recevoir et à cuire un aliment, une coquille (5) formant le corps du capot (1,2), servant de support au sous-ensemble chauffant (4), et comportant des parois latérales (8,9) dont l'extrémité supérieure (24,26) délimite une ouverture (10) dans laquelle le sous-ensemble (4) chauffant est logé, le capot (1,2) comprenant des moyens de fixation (6) qui sont adaptés à fixer le sous-ensemble chauffant (4) à la coquille (5) correspondante, et des moyens de liaison (11) qui sont adaptés à maintenir la coquille (5) à une distance prédéterminée du sous-ensemble chauffant (4), **caractérisé en ce que** chaque moyen de fixation (6) est formé par un harpon (6) qui comporte un crochet (18) élastiquement déformable permettant sa fixation au sous-ensemble chauffant (4) par encliquetage.

2. Capot (1,2) selon la revendication 1, **caractérisé en ce que** chaque moyen de fixation (6) et chaque moyen de liaison (11) sont conformés de façon à limiter le transfert par conduction du sous-ensemble chauffant (4) vers la coquille (5).

3. Capot (1,2) selon la revendication 1 ou 2, **caractérisé en ce que** chaque moyens de fixation (6) est réalisé en un métal mauvais conducteur thermique, par exemple en acier inoxydable.

4. Capot (1,2) selon l'une des revendications 1 à 3, **caractérisé en ce que** chaque moyen de liaison (11) est réalisé en un matériau supportant en continu une température proche de 200°C, par exemple en bakélite.

5. Capot (1,2) selon l'une des revendications 1 à 4, **caractérisé en ce que** chaque harpon (6) est fixé, à la coquille (5).

6. Capot (1,2) selon l'une des revendications 1 à 5, **caractérisé en ce que** le harpon (6) a une élasticité suffisante permettant son accrochage au sous-ensemble chauffant (4).

7. Capot (1,2) selon l'une des revendications 1 à 6, **caractérisé en ce que** la fixation du crochet (18) au sous-ensemble chauffant (4) est réalisée par sa pénétration dans un orifice (19) du sous-ensemble chauffant (4).

8. Capot (1,2) selon l'une des revendications 1 à 7, **caractérisé en ce que** le harpon (6) comprend une languette (16) qui s'étend entre la paroi de fond (7) de la coquille (5) et le sous-ensemble chauffant (4), et qui porte le crochet (18).

9. Capot (1,2) selon la revendication 8, **caractérisé en ce que** le harpon (6) comprend, à l'extrémité de la languette (16) opposée au crochet (18), une base (17) adaptée à être fixée à la paroi de fond (7) de la coquille (5), par exemple par surmoulage.

10. Capot (1,2) selon l'une des revendications 1 à 9, **caractérisé en ce que** chaque moyen de liaison (11) est formé par une entretoise (11) qui est adaptée à empêcher tout contact direct entre le sous-ensemble chauffant (4) et la coquille (5).

11. Capot (1,2) selon la revendication 10, **caractérisé en ce que** l'entretoise (11) est écartée de la résistance électrique (29) du sous-ensemble chauffant (4), dans les directions du plan contenant la résistance électrique (29).

12. Capot (1,2) selon la revendication 10 ou 11, **caractérisé en ce que** l'entretoise (11) est en contact avec la face inférieure du rebord périphérique (13) du sous-ensemble chauffant (4).

13. Capot (1,2) selon l'une des revendications 10 à 12, **caractérisé en ce que** l'entretoise (11) est en contact avec la coquille (5).

## Claims

1. Casing (1, 2) of an electric appliance of the waffle-iron type comprising a heating subassembly (4) designed to receive and cook a foodstuff, a shell (5) forming the body of the casing (1, 2), serving as support for the heating subassembly (4), and having side walls (8, 9), the side walls (8, 9) having upper ends (24, 26) delimiting an opening (10) in which the heating subassembly (4) is housed, the casing (1, 2) having fixing means (6) which are designed to fix the heating subassembly (4) to the corresponding shell (5), and connecting means (11) which are designed to hold the shell (5) at a predetermined distance from the heating subassembly (4), **characterized in that** each fixing means (6) is formed as a harpoon-like element (6) which has an elastically deformable hook (18) enabling it to be fixed to the heating subassembly (4) by snap-in connection.

2. Casing (1, 2) according to Claim 1, **characterized in that** each fixing means (6) and each connecting means (11) is formed in such a way as to limit transfer of heat by conduction from the heating subassembly (4) to the shell (5).

3. Casing (1, 2) according to Claim. 1 or 2, **characterized in that** each fixing means (6) is made of a metal which is a poor thermal conductor, for example stainless steel.

4. Casing (1, 2) according to one of Claims 1 to 3, **characterized in that** each connecting means (11) is made of a material which can consistently withstand a temperature in the region of 200°C, for example Bakelite.

5. Casing (1, 2) according to one of Claims 1 to 4, **characterized in that** each harpoon-like element (6) is fixed to the shell (5).

6. Casing (1, 2) according to one of Claims 1 to 5, **characterized in that** the harpoon-like element (6) has sufficient elasticity to enable it to hook onto the heating subassembly (4).

7. Casing (1, 2) according to one of Claims 1 to 6, **characterized in that** the hook (18) is fixed to the heating subassembly (4) by its insertion into an opening (19) provided in said heating subassembly (4).

8. Casing (1, 2) according to one of Claims 1 to 7, **characterized in that** the harpoon-like element (6) has a tongue (16) extending between the base wall (7) of the shell (5) and the heating subassembly (4) and bearing the hook (18).

9. Casing (1, 2) according to Claim 8, **characterized in that** the harpoon-like element (6) has, at the end of the tongue (16) opposite the hook (18), a base (17) designed to be fixed to the base wall (7) of the shell (5), for example by overmoulding.

10. Casing (1, 2) according to one of Claims 1 to 9, **characterized in that** each connecting means (11) takes the form of a spacer (11) which is designed to prevent any direct contact between the heating subassembly (4) and the shell (5).

11. Casing (1, 2) according to Claim 10, **characterized in that** the spacer (11) is disposed at a distance from the electric element (29) of the heating subassembly (4) in the directions of the plane containing the electric element (29).

12. Casing (1, 2) according to Claim 10 or 11, **characterized in that** the spacer (11) is in contact with the lower face of the peripheral edge (13) of the heating subassembly (4).

13. Casing (1, 2) according to one of Claims 10 to 12, **characterized in that** the spacer (11) is in contact with the shell (5).

## Patentansprüche

1. Gehäuse (1, 2) einer elektrischen Vorrichtung in der Bauart eines Waffeleisens mit einer Heiz- Untergruppe (4), die dazu ausgebildet ist, ein Lebensmittel aufzunehmen und zu backen, einer den Körper des Gehäuses (1, 2) bildenden Schale (5), die zur Abstützung der Heiz-Untergruppe (4) dient, und mit Seitenwänden (8, 9), deren oberes Ende (24, 26) eine Öffnung (10) begrenzt, in welcher die Heiz- Untergruppe (4) aufgenommen ist, wobei das Gehäuse (1, 2) aufweist Befestigungselemente (6), die so ausgebildet sind, dass sie die Heiz- Untergruppe (4) an der entsprechenden Schale (5) befestigen, und Verbindungselemente (11), die so ausgebildet sind, dass sie die Schale (5) in einem vorbestimmten Abstand zur Heiz- Untergruppe (4) halten, **dadurch gekennzeichnet, dass** jedes Befestigungselement (6) durch eine Klammer (6) gebildet wird, die einen elastisch verformbaren Haken (18) aufweist, welcher dessen Befestigung an der Heiz- Untergruppe (4) durch Einrastung ermöglicht.

2. Gehäuse (1, 2) nach Anspruch 1, **dadurch gekennzeichnet, dass** jedes Befestigungselement (6) und jedes Verbindungselement (11) in der Weise ausgebildet sind, dass sie die konduktive Wärmeübertragung von der Heiz-Untergruppe (4) zur Schale (5) begrenzen.

3. Gehäuse (1, 2) nach Anspruch 1 oder 2, **dadurch gekennzeichnet, dass** jedes Befestigungselement (6) aus einem schlecht wärmeleitenden Metall ausgeführt ist, zum Beispiel aus rostfreiem Stahl.

4. Gehäuse (1, 2) nach einem der Ansprüche 1 bis 3, **dadurch gekennzeichnet, dass** jedes Verbindungselement (11) aus einem Material ausgeführt ist, das kontinuierlich eine Temperatur nahe 200° Grad Celsius aushält, zum Beispiel aus Bakelit.

5. Gehäuse (1, 2) nach einem der Ansprüche 1 bis 4, **dadurch gekennzeichnet, dass** jede Klammer (6) an der Schale (5) befestigt ist.

6. Gehäuse (1, 2) nach einem der Ansprüche 1 bis 5, **dadurch gekennzeichnet, dass** die Klammer (6) eine Elastizität hat, die ausreicht, sein Verhaken an der Heiz-Untergruppe (4) zu ermöglichen.

7. Gehäuse (1, 2) nach einem der Ansprüche 1 bis 6, **dadurch gekennzeichnet, dass** die Befestigung des Hakens (8) an der Heiz- Untergruppe (4) durch dessen Eindringen in eine Öffnung (19) der Heiz- Untergruppe (4) durchgeführt wird.

8. Gehäuse (1, 2) nach einem der Ansprüche 1 bis 7, **dadurch gekennzeichnet, dass** die Klammer (6) eine Leiste (16) aufweist, die sich zwischen der Bodenwand (7) der Schale (5) und der Heiz- Untergruppe (4) erstreckt und die den Haken (18) trägt.

9. Gehäuse (1, 2) nach Anspruch 8, **dadurch gekennzeichnet, dass** die Klammer (6) am Ende der Leiste (16), entgegengesetzt zum Haken (18), eine Basis (17) aufweist, die so ausgebildet ist, dass sie die Bodenwand (7) der Schale (5) zum Beispiel durch Anformung befestigt werden kann.

10. Gehäuse (1, 2) nach einem der Ansprüche 1 bis 9, **dadurch gekennzeichnet, dass** jedes Verbindungselement (11) durch ein Abstandsstück (11) gebildet wird, das so ausgebildet ist, dass es jeden direkten Kontakt zwischen der Heiz- Untergruppe (4) und der Schale (5) verhindert.

11. Gehäuse (1, 2) nach Anspruch 10, **dadurch gekennzeichnet, dass** das Abstandsstück (11) vom elektrischen Widerstand (29) der Heiz- Untergruppe (4) in den Richtungen der Ebene entfernt liegt, welche den elektrischen Widerstand (29) enthält.

12. Gehäuse (1, 2) nach Anspruch 10 oder 11, **dadurch gekennzeichnet, dass** sich das Abstandsstück (11) in Kontakt mit der Unterseite des Umfangsrandes (13) der Heiz-Untergruppe (4) befindet.

13. Gehäuse (1, 2) nach einem der Ansprüche 10 bis 12, **dadurch gekennzeichnet, dass** sich das Abstandsstück (11) in Kontakt mit der Schale (5) befindet.
